# EUROPÄISCHE PATENTSCHRIFT

(11) **EP 0 836 031 B1**
(45) Veröffentlichungstag und Bekanntmachung des Hinweises auf die Patenterteilung: **21.05.2003**
(21) Anmeldenummer: 97117299.4
(22) Anmeldetag: 07.10.1997
(51) Int. Cl.: F16F 7/116, F16F 1/22

(54) **Schwingungstilger**
Dynamic damper
Amortisseur dynamique

(30) Priorität: 10.10.1996 DE 19641763
(43) Veröffentlichungstag der Anmeldung: 15.04.1998
(73) Patentinhaber: EUROCOPTER DEUTSCHLAND GmbH, D-81663 München (DE)
(72) Erfinder: Bansemir, Horst, Dr., 81825 München (DE); Bongers, Bernd, 85551 Kirchheim (DE)
(74) Vertreter: Asch, Konrad, Dipl.-Ing.

(56) Entgegenhaltungen:
- DE-A- 2 036 979
- DE-A- 4 021 158
- US-A- 4 494 634
- US-A- 4 744 547

## Beschreibung

Die Erfindung bezieht sich auf einen Schwingungstilger mit veränderlicher Resonanzfrequenz für ein dynamisch erregtes Bauteil, nach dem Oberbegriff des Patentanspruchs 1 bzw. 5.

Schwingungstilger dieser Art können überall dort eingesetzt werden, wo eine periodische Erregung eines Bauteils kompensiert werden soll, insbesondere bei Hubschraubern, um Vibrationserscheinungen an Hubschrauber-, z.B. Cockpitteilen, die vom Rotorsystem des Hubschraubers mit der Rotordrehfrequenz dynamisch erregt werden, entgegenzuwirken.

Für moderne Hubschrauber, die mit einer variablen Rotordrehzahl betrieben werden, sind Schwingungstilger mit veränderlicher Resonanzfrequenz erforderlich. Zu diesem Zweck ist es bekannt, an der außenliegenden schwingenden Trägheitsmasse eines Blattfeder-Massesystems mittels eines elektromotorisch gesteuerten Stellantriebs Differentialmassen in Längsrichtung der Blattfederanordnung zu verschieben, um dadurch die Eigenfrequenz des Schwingungstilgers fortlaufend an die Erregerfrequenz des Rotorsystems anzupassen. Ein derartiger Frequenzverstellmechanismus im schwingenden Teil des Feder-Massesystems ist jedoch mit einem relativ großen Bauaufwand verbunden und unterliegt hohen Beschleunigungen bei großen Lastwechselzahlen, so daß Lebensdauerprobleme auftreten können.

Aufgabe der Erfindung ist es, einen Schwingungstilger der eingangs genannten Art zu schaffen, der über eine baulich einfache und störunanfällige Resonanzfrequenzverstellung im nichtschwingenden Bereich des Feder-Massesystems verfügt.

Diese Aufgabe wird erfindungsgemäß durch den im Patentanspruch 1 bzw. 5 gekennzeichneten Schwingungstilger gelöst.

Erfindungsgemäß wird aufgrund der beanspruchten, zwischen Gehäuse und Blattfederanordnung wirksamen Abstützung mit variabel einstellbarer Einspanngeometrie bzw. Federsteifigkeit erreicht, daß sich die Biegeelastizität der Federanordnung und damit die Resonanzfrequenz des Schwingungstilgers allein durch einen gehäuseseitigen, also im nichtschwingenden Bereich des Feder-Massesystems angeordneten Stellmechanismus verändern läßt und somit baulich komplizierte und dynamisch hochbelastete Massen-Verschiebeantriebe, die in den schwingenden Teil des Systems integriert sind, in Fortfall geraten.

In weiterer, besonders bevorzugter Ausgestaltung der Erfindung wird die Einspanngeometrie der Abstützung gemäß Anspruch 2 dadurch verändert, daß die Blattfederanordnung mindestens zwei übereinanderliegende, auf seiten der Trägheitsmasse fest miteinander verbundene Einzelfedem enthält, deren gegenseitiger Abstand an der Einspannstelle mittels der Abstützung quer zur Flächenerstreckung der Blattfederanordnung veränderlich einstellbar ist. Durch eine solche abstandsvariable Abstützung der Doppelblattfeder läßt sich auf dem Wege über das Biegewiderstandsmoment die Biegesteifigkeit und damit die Resonanzfrequenz des Feder-Massesystems auf baulich besonders einfache Weise durch gehäuseseitige Steuereingriffe beeinflussen.

Gemäß einer weiteren, nach Anspruch 3 bevorzugten Ausgestaltung der Erfindung, die auch für Schwingungstilger mit einer Einzelblattfeder verwenbar ist, wird die wirksame Blattfederlänge und damit Resonanzfrequenz durch eine längenvariable Einspanngeometrie in der Weise beeinflußt, daß die gehäuseseitige Abstützung der Blattfeder zwei je an einer Blattfederseite mit veränderlicher Einspannlänge anliegende Druckstücke enthält, die in baulich zweckmäßiger Ausgestaltung nach Anspruch 4 jeweils aus einer in Richtung der Blattfederanordnung konvex gebogenen, in einer längenveränderlichen Kontaktzone an die Blattfederanordnung angedrückten Spannfeder bestehen.

Bei der zweiten Variante der Erfindung enthält die federnde Abstützung gemäß Anspruch 6 aus Gründen einer baulichen Vereinfachung vorzugsweise jeweils mechanische Druckfedern mit nicht-linearer Federkennlinie und veränderlich einstellbarer Federvorspannung, wobei als Stützfedern anstelle von Schraubenfedern selbstverständlich auch nichtmetallische Federelemente, etwa Gasfedern mit veränderlich einstellbarer Federhärte verwendet werden können.

Im Hinblick auf eine einfache Gestaltung des Verstellmechanismus zur Änderung der Einspanngeometrie bzw. Federsteifigkeit besteht dieser gemäß Anspruch 7 vorzugsweise aus einer drehbar am Gehäuse gelagerten Verstellspindel und zwei, bei einer Drehlagenänderung der Spindel gegensinnig zueinander quer zur Flächenerstreckung der Blattfederanordnung verstellbaren Stützgliedern.

Nach Anspruch 8 ist der Schwingungstilger vorzugsweise mit einer Steuereinheit versehen, durch die die Resonanzfrequenz des Schwingungstilgers adaptiv den Änderungen der Erregerfrequenz nachgesteuert wird.

Die Erfindung wird nunmehr anhand von Ausführungsbeispielen in Verbindung mit den Zeichnungen näher erläutert. Es zeigen in stark schematisierter Darstellung:
- **Fig. 1**: ein erstes Ausführungsbeispiel eines passiven Schwingungstilgers mit einer längenvariablen Blattfedereinspannung,
- **Fig. 2**: das Funktionsprinzip eines zweiten Ausführungsbeispieles mit einer Doppelblattfeder und einer hinsichtlich des Biegewiderstandsmoment variablen Blatteinspannung;
- **Fig. 3**: eine detailliertere Darstellung der Ausführungsform gemäß Fig. 2; und
- **Fig. 4**: eine der Fig. 3 entsprechende Darstellung eines dritten Ausführungsbeispieles der Erfindung.

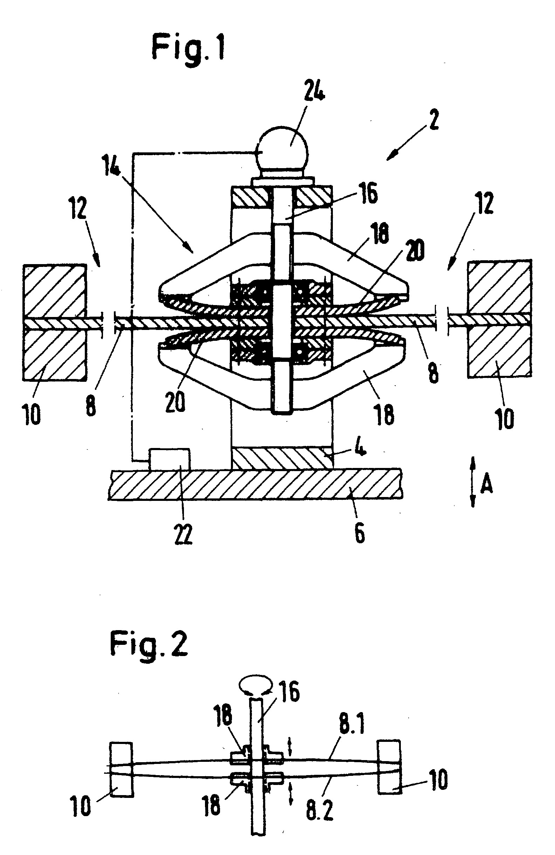

Gemäß Fig. 1 ist ein passiver Schwingungstilger 2 mit seinem Gehäuse 4 fest mit einem in Pfeilrichtung A periodisch erregten Bauteil 6, etwa dem Instrumentenpanel eines Hubschrauber-Cockpits, welches vom Rotorsystem mit der Rotordrehfrequenz zu Schwingungen angeregt wird, verbunden und enthält eine am Gehäuse 4 eingespannte Blattfeder 8, an deren freien Enden jeweils eine in Pfeilrichtung A schwingungsfähige Trägheitsmasse 10 befestigt ist. Das aus einem Blattfederarm und einer Trägheitsmasse 10 bestehende Feder-Massesystem 12 wird durch die auf das Bauteil 6 einwirkenden Erregerkräfte in Schwingungen versetzt und zur Tilgung der Erregerkräfte ist es erforderlich, daß die Resonanzfrequenz des Feder-Massesystems 12 mit der Erregerfrequenz übereinstimmt, d.h. für frequenzvariable Bauteilerregungen, also etwa für Hubschrauber, deren Rotorsystem mit veränderlicher Drehzahl betrieben wird, muß die Resonanzfrequenz des Schwingungstilgers 2 nach Maßgabe der Erregerfrequenz verändert werden.

Zu diesem Zweck ist die Blattfeder 8 am Gehäuse 4 mittels einer insgesamt mit 14 bezeichneten Abstützung eingespannt, welche eine veränderlich einstellbare Einspanngeometrie besitzt. Im einzelnen besteht die Abstützung 14 aus einer drehbar am Gehäuse 4 gelagerten Verstellspindel 16, mit der zwei jeweils auf einer Blattfederseite angeordnete, axial verschieblich, aber drehfest am Gehäuse 4 geführte Stützglieder 18 über gegenläufige Einstellgewinde verschraubt sind. Bei einer Drehung der Verstellspindel 16 werden folglich die beiden Stützglieder 18 quer und symmetrisch zur Flächenerstreckung der Blattfeder 8 auf diese zu- oder von dieser fortbewegt. Eingespannt ist die Blattfeder 8 zwischen ebenfalls blattfederartigen, konvex in Richtung der Blattfeder 8 gewölbten Druckstücken 20, die im mittleren Bereich mit der Blattfeder 8 und dem Gehäuse 4 verschraubt und an ihren Enden längsverschieblich an den Stützgliedern 18 gelagert sind. Wird die Verstellspindel 16 verdreht, so werden die Druckstücke 20 über die Stützglieder 18 - je nach Drehrichtung der Verstellspindel 16 - stärker oder schwächer an die Blattfeder 8 angedrückt, und dementsprechend ändert sich die Länge des Kontakt- und Einspannbereiches zwischen Druckstücken 20 und Blattfeder 8, mit der Folge, daß sich die freie Blattfederlänge und damit auch die für die Resonanzfrequenz des Schwingungstilgers maßgebliche Biegesteifigkeit der Blattfeder 8 entsprechend verringert oder erhöht.

Zur fortlaufenden Anpassung der Resonanzfrequenz des Schwingungstilgers 2 an die Erregerfrequenz ist eine Steuereinheit 22 mit einem die Erregerfrequenz aufnehmenden Sensor und einem Elektromotor 24 vorgesehen, der die Verstellspindel 16 nach Maßgabe der von der Steuereinheit 22 erzeugten Stellsignale drehpositioniert.

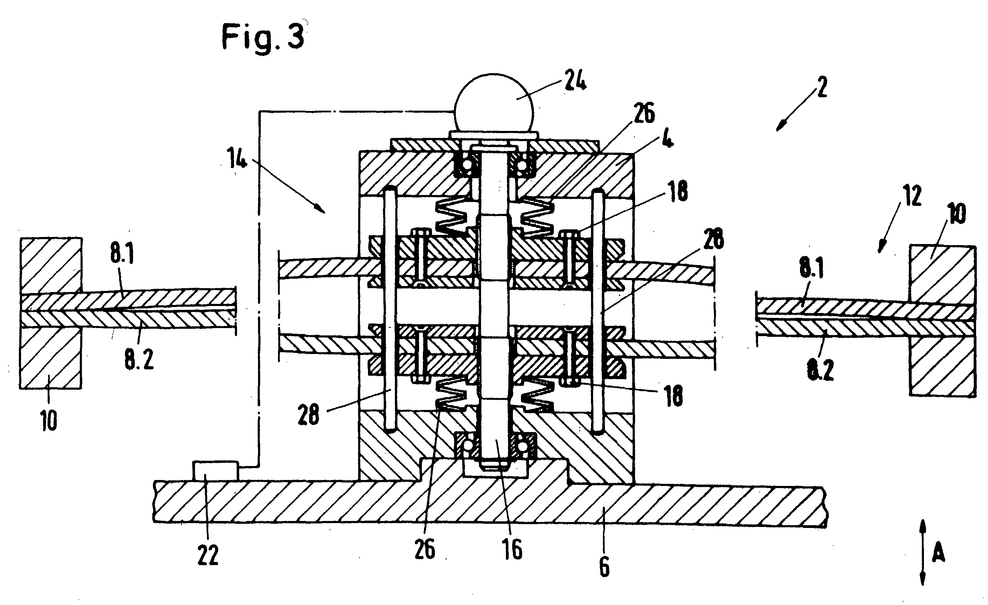

Bei dem Schwingungstilger nach den Fig. 2 und 3, wo die dem ersten Ausführungsbeispiel funktionsgleichen Bauteile durch das gleiche Bezugszeichen gekennzeichnet sind, besteht die Blattfeder 8 aus zwei übereinanderliegenden, auf seiten der Trägheitsmasse 10 fest miteinander verbundenen Einzelfedern 8.1 und 8.2, deren gegenseitiger Abstand an der gehäuseseitigen Einspannstelle mittels der verstellbaren, aus Spindel 16 und Stützgliedern 18 bestehenden Abstützung 14 quer zur Flächenerstreckung der Blattfedern 8 veränderlich einstellbar ist. Bei einer Änderung des Federabstandes an der Einspannstelle ändert sich das Biegewiderstandsmoment und dadurch wiederum die Biegesteifigkeit der Doppelblattfeder 8 und somit die Resonanzfrequenz des Feder-Massesystems 12. Wie Fig. 3 im einzelnen zeigt, sind bei diesem Ausführungsbeispiel die Stützglieder 18 jeweils zweiteilig aus unter Zwischenlage des Blattfederelements 8.1 bzw. 8.2 miteinander verschraubten, plattenförmigen Stützelementen ausgebildet und werden durch Tellerfeder 26 in spielfreiem Gewindekontakt mit der Verstellspindel 16 gehalten sowie mit Hilfe von Sicherungsstiften 28 axial verschieblich, aber verdrehsicher am Gehäuse 4 geführt. Im übrigen entspricht die Bau- und Funktionsweise des Schwingungstilgers 2 nach den Fig. 2 und 3 der des ersten Ausführungsbeispieles.

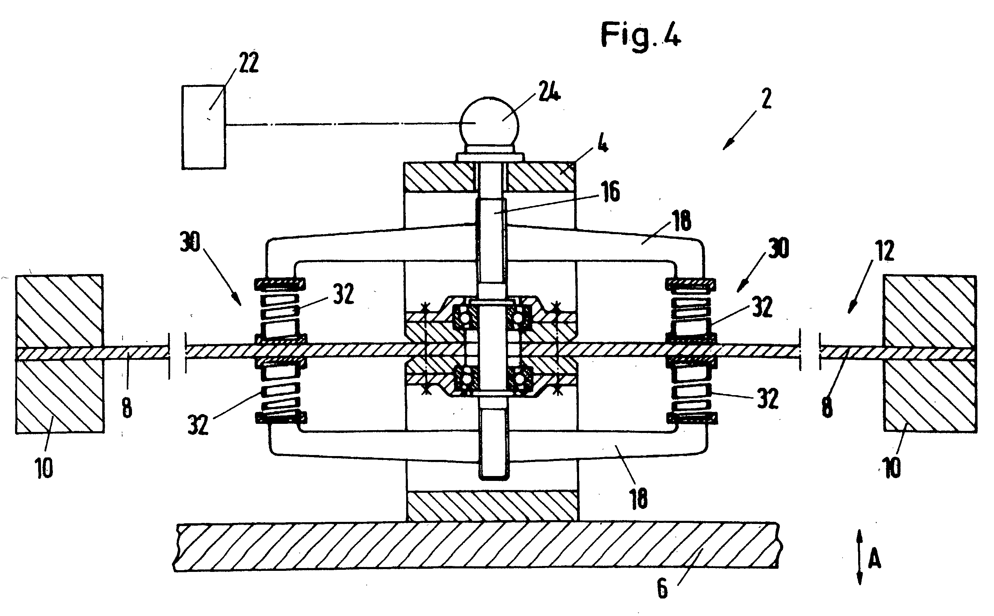

Bei dem Schwingungstilger nach Fig. 4, wo wiederum die den vorherigen Ausführungsbeispielen funktionsgleichen Bauteile durch das gleiche Bezugszeichen gekennzeichnet sind, ist die Blattfeder 8 mit unveränderlicher Einspanngeometrie am Gehäuse 4 festgespannt. Zur Resonanzverstellung des Schwingungstilgers 2 ist zusätzlich zur Einspannstelle und im Abstand von dieser eine federnde Abstützung 30 für jeden Blattfederarm vorgesehen. Die Abstützung 30 enthält auf jeder Seite der Blattfeder 8 eine zwischen dieser und dem jochförmigen Stützglied 18 wirkende Stützfeder 32, die - wie durch die sich ändernde Wandhöhe der einzelnen Federwindungen angedeutet - eine nicht-lineare Federkennlinie besitzt. Werden die Stützglieder 18 durch Drehung der Verstellspindel 16 in gleicher Weise wie bei den oben beschriebenen Ausführungsbeispielen gegensinnig zueinander axial verstellt, so ändert sich die Vorspannung der Stützfedern 32 und somit auch deren Federsteifigkeit. Hierdurch erhöht oder verringert sich die Steifigkeit des Gesamtfedersystems 8, 32 und folglich auch die Resonanzfrequenz des Schwingungstilgers 2.

Zur adaptiven Anpassung des Schwingungstilgers 2 an die momentane Erregerfrequenz ist wiederum eine Steuereinheit 22 mit einem motorischen Antrieb 24 zur Drehpositionierung der Verstellspindel 16 vorgesehen. Im übrigen ist die Bau- und Funktionsweise des Schwingungstilgers 2 nach Fig. 4 die gleiche wie bei den ersten beiden Ausführungsbeispielen.

## Patentansprüche

1. Schwingungstilger mit veränderlicher Resonanzfrequenz für ein dynamisch erregtes Bauteil, mit einem schwingungsfest mit dem Bauteil verbundenen Gehäuse und einem in Richtung der Bauteilerregung schwingungsfähigen Feder-Massesystem, bestehend aus einer einerseits gehäusefest eingespannten und andererseits am freien Federende mit einer Trägheitsmasse versehenen Blattfederanordnung,
**dadurch gekennzeichnet, daß**
die Trägheitsmasse (10) fest mit dem freien Blattfederende verbunden und zur Verstellung der Resonanzfrequenz im Bereich der Einspannstelle zwischen Gehäuse (4) und Blattfederanordnung (8) eine Abstützung (14) mit veränderlich einstellbarer Blattfeder-Einspanngeometrie vorgesehen ist.

2. Schwingungstilger nach Anspruch 1,
**dadurch gekennzeichnet, daß**
die Blattfederanordnung (8) mindestens zwei übereinanderliegende, auf seiten der Trägheitsmasse (10) fest miteinander verbundene Einzelfedern (8.1, 8.2) enthält, deren gegenseitiger Abstand an der Einspannstelle mittels der Abstützung (14) quer zur Flächenerstreckung der Blattfederanordnung veränderlich einstellbar ist.

3. Schwingungstilger nach Anspruch 1,
**dadurch gekennzeichnet, daß**
die Abstützung (14) zur Einspannung der Blattfederanordnung (8) zwei jeweils auf einer Blattfederseite an dieser anliegende, unter Änderung der wirksamen Blattfeder-Einspannlänge verstellbare Druckstücke (20) enthält.

4. Schwingungstilger nach Anspruch 3,
**dadurch gekennzeichnet, daß**
als Druckstücke einander unter Zwischenlage der Blattfederanordnung (8) konvex zugekehrte, mittels der Abstützung (14) in einer längenvariablen Kontaktzone an die Blattfederanordnung angedrückte Spannfederelemente (20) vorgesehen sind.

5. Schwingungstilger mit veränderlicher Resonanzfrequenz für ein dynamisch erregtes Bauteil, mit einem schwingungsfest mit dem Bauteil verbundenen Gehäuse und einem in Richtung der Bauteilerregung schwingungsfähigen Feder-Massesystem, bestehend aus einer einerseits gehäusefest eingespannten und andererseits am freien Federende mit einer Trägheitsmasse versehenen Blattfederanordnung,
**dadurch gekennzeichnet, daß**
die Trägheitsmasse (10) fest mit dem freien Blattfederende verbunden und zur Verstellung der Resonanzfrequenz eine im Abstand zur Einspannstelle quer zur Flächenerstreckung der Blattfederanordnung (8) auf diese einwirkende, federnde Abstützung (30) mit einer veränderlich einstellbaren Federsteifigkeit vorgesehen ist.

6. Schwingungstilger nach Anspruch 5,
**dadurch gekennzeichnet, daß**
die Abstützung (30) jeweils von entgegengesetzten Seiten auf die Blattfederanordnung (8) einwirkende Stützfedem (32) mit nicht-linearer Federkennlinie und veränderlich einstellbarer Federvorspannung enthält.

7. Schwingungstilger nach einem der vorhergehenden Ansprüche,
**dadurch gekennzeichnet, daß**
die Abstützung (14, 30) zur Änderung der Einspanngeometrie bzw. Federsteifigkeit einen Verstelmiechanismus mit einer drehbar am Gehäuse (4) gelagerten Verstellspindel (16) und zwei bei einer Drehlagenänderung der Spindel gegensinnig zueinander quer zur Flächenerstreckung der Blattfederanordnung (8) verstellten Stützgliedem (18) enthält.

8. Schwingungstilger nach einem der vorhergehenden Ansprüche,
**gekennzeichnet durch**
eine die Abstützung (14, 30) kontinuierlich nach Maßgabe der Bauteil-Erregerfrequenz verstellende Steuereinheit (22, 24).

## Claims

1. Vibration damper having a variable resonant frequency for a dynamically excited component, having a housing which is connected to the component in a vibration-resistant manner and having a spring-mass system which is capable of vibrating in a direction of the excitation of the component and consists of a leaf-spring arrangement which, on the one hand, is clamped so as to be secure with respect to the housing and, on the other hand, at the free spring end is provided with a mass of inertia, **characterised in that** the mass of inertia (10) is fixedly connected to the free leaf-spring end, and for the purpose of adjusting the resonant frequency in the region of the clamping point between the housing (4) and the leaf-spring arrangement (8) there is provided a support (14) with variably adjustable leaf-spring clamping geometry.

2. Vibration damper according to claim 1, **characterised in that** the leaf-spring arrangement (8) contains at least two superimposed individual springs (8.1, 8.2) which are fixedly connected together on the sides of the mass of inertia (10) and the mutual spacing of which at the clamping point can be adjusted in a variable manner by means of the support (14) transversely in relation to the areal extent of the leaf-spring arrangement.

3. Vibration damper according to claim 1, **characterised in that** for the purpose of clamping the leaf-spring arrangement (8) the support (14) contains two thrust members (20) which on respective leaf-spring sides rest against the latter and which can be adjusted, changing the effective leaf-spring clamping length.

4. Vibration damper according to claim 3, **characterised in that** tension spring elements (20) are provided as the thrust members that convexly face each other with interposition of the leaf-spring arrangement (8) and which by means of the support (14) are pressed against the leaf-spring arrangement in a contact zone of variable length.

5. Vibration damper having a variable resonant frequency for a dynamically excited component, having a housing which is connected to the component in a vibration-resistant manner and having a spring-mass system which is capable of vibrating in a direction of the excitation of the component and consists of a leaf-spring arrangement which, on the one hand, is clamped so as to be secure with respect to the housing and, on the other hand, at the free spring end is provided with a mass of inertia, **characterised in that** the mass of inertia (10) is fixedly connected to the free leaf-spring end, and provided for the purpose of adjusting the resonant frequency there is a resilient support (30) which at a distance from the clamping point transversely in relation to the areal extent of the leaf-spring arrangement (8) acts on the latter and has variably adjustable spring rigidity.

6. Vibration damper according to claim 5, **characterised in that** the support (30) contains support springs (32) which act from respective opposing sides on the leaf-spring arrangement (8) and which have a non-linear spring characteristic and variably adjustable spring pre-tension.

7. Vibration damper according to one of the preceding claims, **characterised in that** the support (14, 30) for changing the clamping geometry or spring rigidity contains an adjusting mechanism with an adjusting spindle (16), which is rotatably mounted on the housing (4), and two support elements (18) which, when the rotational position of the spindle is changed, are adjusted in opposite directions in relation to each other transversely in relation to the areal extent of the leaf-spring arrangement (8).

8. Vibration damper according to one of the preceding claims, **characterised by** a control unit (22, 24) which continuously adjusts the support (14, 30) in accordance with the excitation frequency of the component.

## Revendications

1. Amortisseur de vibrations à fréquence de résonance variable pour une pièce excitée de manière dynamique, comportant un boîtier relié solidairement en vibrations avec la pièce et un système masse-ressort susceptible de vibrer dans la direction d'excitation de la pièce, ce système étant formé d'un dispositif à ressort-lame dont une extrémité est serrée solidairement au boîtier et dont l'autre extrémité de ressort, libre, comporte une masse d'inertie,
**caractérisé en ce que**
la masse d'inertie (10) est reliée solidairement à l'extrémité libre de la lame de ressort et pour régler la fréquence de résonance au niveau du point de serrage entre le boîtier (4) et le dispositif à lame de ressort (8), on a un appui (14) à géométrie de serrage-ressort-lame réglable de manière variable.

2. Amortisseur de vibrations selon la revendication 1,
**caractérisé en ce que**
le dispositif à ressort-lame (8) comporte au moins deux ressorts séparés (1.1, 1.2) superposés, reliés solidairement du côté des masses d'inertie (10) et dont la distance réciproque est réglable au point de serrage par l'appui (14), transversalement à l'extension de surface du dispositif à ressort-lame.

3. Amortisseur de vibrations selon la revendication 1,
**caractérisé en ce que**
l'appui (14) pour serrer le dispositif à ressort-lame (8) comporte chaque fois deux pièces de poussée (20) appliquées contre une face du ressort-lame, et réglables par variation de leur longueur de serrage active du ressort-lame.

4. Amortisseur de vibrations selon la revendication 3,
**caractérisé en ce que**
les pièces de pression sont constituées par des éléments de serrage à ressort (20) convexes, tournés l'un vers l'autre avec interposition du dispositif à ressort-lame, et qui sont pressés contre le dispositif à ressort-lame par l'appui (14) suivant une zone de contact de longueur variable.

5. Amortisseur de vibrations à fréquence de résonance variable pour une pièce excitée de manière dynamique, comportant un boîtier relié solidairement en vibrations avec la pièce et un système masse-ressort susceptible de vibrer dans la direction d'excitation de la pièce, comprenant un dispositif à ressort-lame serré d'un côté solidairement au boîtier et de l'autre une masse d'inertie prévue à l'extrémité libre du ressort,
**caractérisé en ce que**
la masse d'inertie (10) est reliée solidairement à l'extrémité libre de la lame de ressort et pour régler la fréquence de résonance il est prévu un appui élastique (30) à rigidité de ressort réglable de manière variable, cet appui étant prévu à distance du point de serrage, transversalement par rapport à l'extension en surface du dispositif à ressort-lame (8) et agissant sur celui-ci.

6. Amortisseur de vibrations selon la revendication 5,
**caractérisé en ce que**
l'appui (30) comporte des ressorts d'appui (32) agissant par les deux côtés sur le dispositif de ressort-lame (8) et ayant une caractéristique de ressort non linéaire et une précontrainte de ressort réglable de manière variable.

7. Amortisseur de vibrations selon l'une des revendications précédentes,
**caractérisé en ce que**
l'appui (14, 30) comporte pour modifier la géométrie de serrage ou la rigidité de ressort, un mécanisme d'actionnement comportant une broche d'actionnement (16) montée à rotation sur le boîtier (4) et ayant deux organes d'appui (18) réglés en sens opposé l'un par rapport à l'autre transversalement à l'extension de surface du dispositif de ressort-lame (8), par la rotation de la broche.

8. Amortisseur de vibrations selon l'une des revendications précédentes,
**caractérisé par**
une unité de commande (22, 24) qui règle l'appui (14, 30) en continu selon l'indication de la fréquence d'excitation de la pièce.
